# EUROPÄISCHE PATENTSCHRIFT

(11) **EP 1 024 081 B1**
(45) Veröffentlichungstag und Bekanntmachung des Hinweises auf die Patenterteilung: **03.11.2004**
(21) Anmeldenummer: 00101623.7
(22) Anmeldetag: 28.01.2000
(51) Int. Cl.: B64C 11/06, B64C 11/04

(54) **Blattwurzel für Propeller- und Rotorblätter**
Blade root for propellers and rotor blades
Moyeu pour pale d'hélices et de rotors

(30) Priorität: 29.01.1999 DE 19903550
(43) Veröffentlichungstag der Anmeldung: 02.08.2000
(73) Patentinhaber: Mühlbauer Luftfahrttechnik GmbH, 94369 Rain (DE)
(72) Erfinder: Mühlbauer, Gerd, Dipl.-Ing., 94369 Rain (DE)
(74) Vertreter: Helms, Joachim, Dipl.-Ing. Patentanwalt

(56) Entgegenhaltungen:
- DE-C- 3 738 216
- GB-A- 1 319 235
- US-A- 2 182 812
- US-A- 4 524 499

## Beschreibung

Die Erfindung betrifft eine Battwurzel für Propeller- und Rotorblätter aus faserverstärktem Kunststoff zur Anordnung in Propeller- bzw. Rotornaben von Flugzeugen, Bodeneffektfahrzeugen, Windkraftgeneratoren oder Gebläsen mit einstellbarer oder verstellbarer Steigung mit einer geteilten Blatthülse und einem Grundkörper, wobei der Blattkörper zwischen dem Grundkörper und der Blatthülse angeordnet ist, und die Innenfläche der Blatthülse einem ersten nabenäußeren Abschnitt, einen sich davon in Nabenrichtung anschließenden zweiten,nach innen zur Längsachse der Blattwurzel gekrümmten Abschnitt geringeren Durchmessers und einen sich an den zweiten Abschnitt anschliessenden dritten, sich nach aussen ersteckenden Abschnitt grösseren Durchmessers aufweist, gemäss dem Oberbegriff von Anspruch 1.

Derartige Propeller-bzw. Rotorblätter sind zur Optimierung ihres Wirkungsgrades im Stillstand einstellbar oder im Betrieb verstellbar.

Derartige Blattwurzeln sind bekannt (GB-PS 13 19 235, DE-PS 37 38 216, EP-PS 0324 617. US-PS 4 407 635). Sie finden überwiegend bei Propellern mit Blättern aus faserverstärktem Kunststoff für Flugzeuge Anwendung, sind aber nicht auf solche Einsatzgebiete beschränkt. Propeller mit Blättern aus faserverstärktem Kunststoff ersetzen zunehmend Propeller mit Blättern aus Leichtmetall oder aus einer Holz-Verbundbauweise, um das Gewicht zu reduzieren und die Betriebsfestigkeit zu erhöhen.

Aus der GB-PS 13 19 235, insbesondere Fig.2, ist eine Blattwurzelkonstruktion für verstellbare Propellerblätter aus faserverstärktem Kunststoff der eingangs genannten Art bekannt, bei der die Blattwurzel ebenfalls mit einer geteilten Blatthülse zur Befestigung auf einer Propellernabe versehen ist. Darüber hinaus ist die Blattwurzel mit einem Schraubenbolzen an der Blattwurzel befestigt, wobei sich der Schraubenbolzen durch den Blatthülsenboden in einen Grundkörper in der Blattwurzel erstreckt.

Nachteilig bei dieser Konstruktion ist, dass der Flansch am unteren Ende der geteilten Blatthülse zwischen einem Flansch am unteren Ende des Grundkörpers und einem Ring eingespannt ist, wobei die erforderliche Spannkraft mittels des in den Grundkörper einschraubbaren Schraubenbolzens aufgebracht wird. Hierdurch wird der Grundkörper geschwächt und es können sich örtliche Spannungsspitzen ergeben, die zu einer Zerstörung der Blattwurzel und zu einem Blattverlust führen. Ebenfalls ist es möglich, dass sich der Schraubenbolzen lockert, was zu einer Verminderung der Schraubenvorspannung und damit zu einem frühzeitigen Versagen der Schraubverbindung führt. Weiter ergibt sich eine örtlich erhöhte Flächenpressung zwischen dem Flansch der geteilten Blatthülse und dem Flansch des Grundkörpers, die ebenfalls die Betriebsfestigkeit vermindert.

Aus der DE-PS 37 38 216 ist eine Blattwurzel für einen Propeller aus faserverstärktem Kunststoff bekannt, bei der eine einteilige Blatthülse ebenfalls mittels eines Schraubenbolzens mit dem Blattkörper verbunden ist. Auch diese Konstruktion hat den Nachteil, das bei einem möglichen Versagen des Schraubenbolzens ein Blattverlust eintreten kann, der zu einer erheblichen Betriebsstörung führt. Weiter besteht die Möglichkeit, dass sich die Verbindung zwischen der Blatthülse und dem Blattkörper durch die konische Ausbildung der Blattwurzel lockern kann, was ebenfalls zu einer Verminderung der Schraubenvorspannung und damit zu einem frühzeitigen Versagen der Schraubverbindung führt.

Die EP-PS 0 324 617 zeigt und beschreibt einen Blattkörper aus faserverstärktem Kunststoff, der an seinem unteren Teil eine zylindrische Blattwurzel aufweist, über der eine einteilige Blatthülse angeordnet ist. Die Betriebsfestigkeit dieser Konstruktion wird dadurch erreicht, dass das Ende des zylindrischen Teils der Blattwurzel mit einer keilförmigen Ausweitung des Durchmessers verbunden ist, die durch eine innere Bundbuchse abgestützt wird. Dadurch wird ein mögliches Herausbewegen des Blattkörpers aus der Blatthülse verhindert. Diese Konstruktion ist allerdings herstellungstechnisch sehr aufwendig und schwierig und somit teuer. Da die Verbindung zwischen der Blattwurzel und der Blatthülse hauptsächlich mittels Kleben erfolgt, besteht beim Lösen der Verbindung die Gefahr, dass sich der Blattkörper unkontrolliert verdreht, wodurch sich bei dem Propeller unterschiedliche Blattwinkel ergeben, die zu einer gefährlichen Betriebsstörung führen.

Bei der in der US-PS 4 407 635 offenbarten Konstruktion ist keine äussere Blatthülse vorgesehen. Dadurch sitzt die Blattlagerung direkt auf der Blattwurzel aus faserverstärktem Kunststoff auf, was sich auf die Betriebsfestigkeit ungünstig auswirkt. Dabei besteht ein direkter Kontakt der Blattwurzel mit dem Schmiermittel der Blattlagerung, wodurch chemische Reaktionen möglich sind , die zu einer Schwächung der Kunststoffmatrix des Blattkörpers führen können. Zusätzlich ist es erforderlich, die Blattwurzel aus faserverstärktem Kunststoff mit einem Ring aus radial orientierten Rovings aus Kunststoffasern zu verstärken, was einen erheblichen Mehraufwand bei der Herstellung bedeutet.

Es ist daher Aufgabe der vorliegenden Erfindung, die genannten Nachteile des Standes der Technik bei bekannten Blattwurzel-Konstruktionen zu vermeiden, insbesondere eine Blattwurzel zu schaffen, bei der eine Schraubverbindung zwischen der Blatthülse und dem Blattkörper entfallen kann und die Herstellung der Blattwurzel vereinfacht wird.

Diese Aufgabe wird durch die in Anspruch 1 gekennzeichnete Erfindung gelöst. D.h. daduch, dass die Blatthülse (10) einen ersten oberen zylindrischen Abschnitt (18) aufweist, dass die Form des Blattkörpers (11) und des Grundkörpers (15) an die Form der Innenfläche der Blatthülse (10) angepasst ist, und dass die geteilte Blatthülse (10) auf den fertigen Blattkörper (11) aufgeklebt ist.

Bei der erfindungsgemässen Blattwurzel ist die Blatthülse als geteiltes Formteil ausgebildet, wodurch die Herstellung von Blattwurzeln bei Propeller- oder Rotorblättern aus faserverstärktem Kunststoff vereinfacht wird, weil die Blattherstellung bis zum letzten Arbeitsgang ohne Blatthülse erfolgen kann und somit Beschädigungen an der Oberfläche der Blatthülse vermieden werden, die zu einem schlechten Sitz der Blattlagerung oder zu einer Undichtheit führen können.

Vorteilhafte Ausgestaltungen der Erfindung ergeben sich aus den Unteransprüchen.

So ist vorgesehen, dass die Blatthülse entweder aus Stahl, Aluminium, Titan oder einer Legierung dieser Werkstoffe besteht.

Ein derartiger Werkstoff ist leicht und weist dennoch die erforderliche Festigkeit auf. Dabei liegt die Blattlagerung auf dem Metall der Blatthülse und nicht auf dem Faserverbund der Blattkörpers auf. Ebenfalls ist eine mechanische Bearbeitung der Oberfläche des Blattkörpers am Blattwurzelabschnitt, auf dem die Blatthülse sitzt, möglich, um eine bessere Passgenauigkeit der Blatthülse zu erreichen. Da die geteilte Blatthülse auf den fertigen Blattkörper aufgeklebt wird, kann zusätzlich ein perfekter Formschluss erreicht werden. Weiter kann die Blatthülse ohne grossen Aufwand zu Inspektionszwecken wieder entfernt werden, um den Teil der Blattwurzel freizulegen, der den grössten Belastungen ausgesetzt ist.

Eine weitere vorteilhafte Ausgestaltung der Erfindung besteht darin, dass die Blatthülsenhälften ohne Spalt ausgebildet sind und mittels zweier Spannringe miteinander verbunden sind.

Die spaltfreie Ausführung der Blatthülse gewährleistet einen optimalen Sitz, wobei die Spannringe nicht nur zur Montage der Blatthülsenhälften vorgesehen sind. Insbesondere dient der äussere Spannring neben der Montage auch zur Befestigung von Fliehgewichten. Diese Fliehgewichte werden bei Propellern für Kunstflugzeuge oder mehrmotorige Flugzeuge benötigt, um die natürlichen Verstellkräfte der Propellerblätter in Richtung kleiner Steigung umzukehren.

Dadurch, daß der dritte, sich nach außen ersteckende Abschnitt größeren Durchmessers einen Flansch als Gegenlager für den unteren Abschnitt des Blattkörpers aufweist, ergibt sich zusätzlich zu dem Kraftschluß mittels Kleben zwischen der Blatthülse und dem Blattkörper ein Formschluß, der die Festigkeit der Blattwurzelkonstruktion erhöht.

Gemäß einer weiteren vorteilhaften Ausgestaltung der Erfindung ist vorgesehen, daß im Bereich des Flansches ein Verstellzapfen zur Übertragung der Verstellkräfte der Verstelleinrichtung auf den Blattkörper angeordnet ist, der sich durch den Grundkörper, den Blattkörper und die Blatthülse parallel zur Längsachse der Blattwurzel erstreckt.

Dieser Verstellzapfen dient weiter als Sicherung, um ein Verdrehen der Blattkörpers gegenüber der Blatthülse zu verhindern. Dabei ist es vorteilhaft, daß die Anbringung der Bohrung für den Verstellzapfen erst bei der Endmontage des Propellers erfolgen kann, und somit die Lage des Verstellzapfens je nach Anwendung frei wählbar ist, wodurch die Lagerhaltung von Blättern reduziert werden kann, weil die Lage des Verstellzapfens nicht während des Herstellungsverfahrens festgelegt werden muß.

Schließlich ist vorgesehen, daß der Verstellzapfen als eingepreßter Zylinderstift ausgebildet ist.

Dies ist konstruktiv einfach, kostengünstig und kann ohne weiteres bei der fertigen Blattwurzel durchgeführt werden.

Ein Ausführungsbeispiel der Erfindung ist in der Zeichnung dargestellt und wird im folgenden näher beschrieben. Es zeigen:
- Fig. 1: eine Ansicht der Blattwurzel im Querschnitt, und
- Fig. 2: eine Ansicht der Blattwurzel in der Draufsicht.

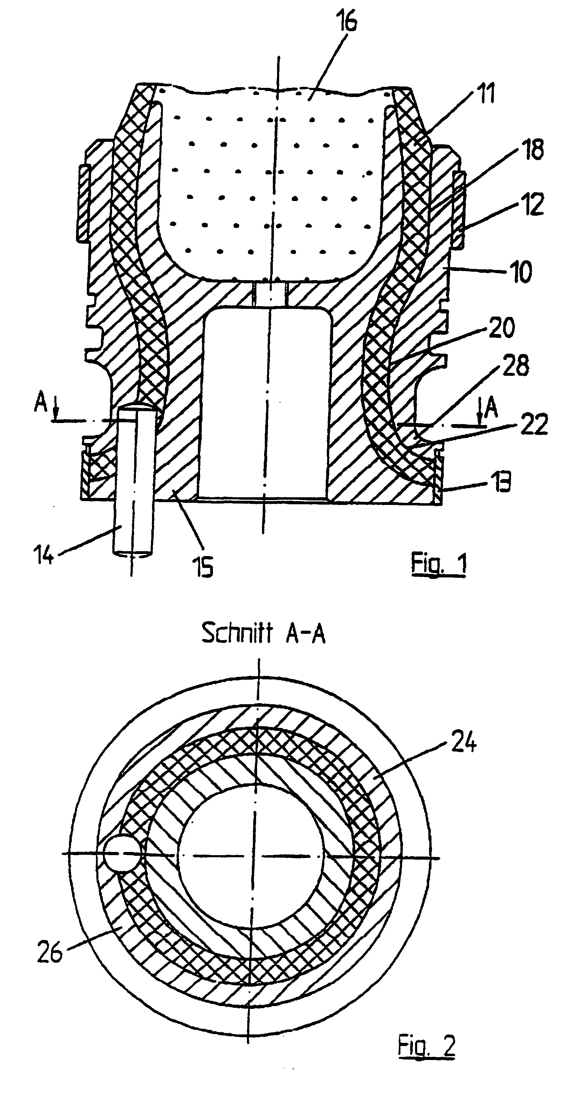

Die in den Fig. 1 und 2 dargestellte Blattwurzel besteht aus einer geteilten, aus zwei Blatthülsenhälften 24,26, bestehenden, fugenlosen Blatthülse 10 aus Stahl, Aluminium, Titan oder Legierungen aus diesen Werkstoffen und einem Grundkörper 15 aus Metall, der in seinem oberen Abschnitt den Kern 16 des Blattkörpers 11 aus Holz oder geschäumten Kunststoff aufnimmt. Zwischen der Blatthülse 10 und dem Grundkörper 15 ist der Blattkörper 11 aus faserverstärktem Kunststoff angeordnet. Die Innenfläche der Blatthülse 10 weist einen ersten oberen zylindrischen Abschnitt 18, einen sich daran anschließenden zweiten nach innen zur Längsachse der Blattwurzel gekrümmten Abschnitt 20 geringeren Durchmessers und einen sich an den zweiten Abschnitt 20 anschließenden dritten, sich nach außen ersteckenden Abschnitt 22 größeren Durchmessers auf, und ist mit dem Blattkörper 11 aus faserverstärktem Kunststoff mittels Kleben verbunden. Auf der Außenseite der Blatthülse 10 sind zur Montage der zwei Blatthülsenhälften 24, 26 zwei Spannringe 12, 13 vorgesehen. Der dritte, sich nach außen erstreckende Abschnitt 22 größeren Durchmessers der Blatthülse 10 weist einen Flansch 28 auf, der als Gegenlager für einen Flansch am unteren Abschnitt des Blattkörpers 11 dient. Im Bereich des Flansches 28 ist ein Verstellzapfen 14 zur Übertragung der Verstellkräfte der Verstelleinrichtung auf den Blattkörper 11 angeordnet, wobei sich der Verstellzapfen parallel zur Längsachse der Blattwurzel durch den Grundkörper 15, den Blattkörper 11 bis in die Blatthülse 10 erstreckt. Hierdurch sichert der Verstellzapfen weiter die Konstruktion gegen ein Verdrehen der Blatthülse 10 gegenüber dem Blattkörper 11. Der Verstellzapfen ist als ein Zylinderstift ausgebildet, kann jedoch ebenfalls jede andere zweckmäßige Form aufweisen und ist in der Blattwurzel in geeigneter Weise befestigt, z.B. mittels einer Preßpassung und/oder Kleben. Die Außenfläche der Blatthülse 10 ist mit Aussparungen bzw. Nuten zur Aufnahme von Lagern und Dichtungen versehen. Die Form des Blattkörpers 11 und des Grundkörpers 15 ist an die Form der Innenfläche der Blatthülse 10 angepaßt.

Mit der erfindungsgemäßen Blattwurzel wird eine Schraubverbindung und die damit geschilderten Nachteile vermieden, wodurch eine kostengünstige und sichere Konstruktion mit langer Lebensdauer erreicht wird.

## Patentansprüche

1. Blattwurzel für Propeller- und Rotorblätter aus faserverstärktem Kunststoff zur Anordnung in Propeller- bzw. Rotornaben von Flugzeugen, Bodeneffektfahrzeugen, Windkraftgeneratoren oder Gebläsen mit einstellbarer oder verstellbarer Steigung mit einer geteilten Blatthülse (10) und einem Grundkörper (15), wobei ein_Blattkörper (11) zwischen dem Grundkörper (15) und der Blatthülse (10) angeordnet ist, und die Innenfläche der Blatthülse (10) einen ersten nabenäußeren Abschnitt, einen sich davon in Nabenrichtung anschließenden zweiten, nach innen zur Längsachse der Blattwurzel gekrümmten Abschnitt (20) geringeren Durchmessers und einen sich an den zweiten Abschnitt (20) anschliessenden dritten, sich nach aussen ersteckenden Abschnitt (22) grösseren Durchmessers aufweist, **dadurch gekennzeichnet, dass** der erste nabenäußere Abschnitt (18) eine zylindrische Form aufweist, dass die Form des Blattkörpers (11) und des Grundkörpers (15) an die Form der Innenfläche der Blatthülse (10) angepasst ist, und dass die geteilte Blatthülse (10) auf den fertigen Blattkörper (11 ) aufgeklebt ist.

2. Blattwurzel nach Anspruch 1, **dadurch gekennzeichnet, dass** die Blatthülse (10) entweder aus Stahl, Aluminium, Titan oder einer Legierung dieser Werkstoffe besteht.

3. Blattwurzel nach Anspruch 1 oder 2, **dadurch gekennzeichnet, dass** die Blatthülsenhälften ( 24,26) ohne Spalt ausgebildet sind und mittels zweier Spannringe (13,12) miteinander verbunden sind.

4. Blattwurzel nach einem oder mehreren der Ansprüche 1 bis 3, **dadurch gekennzeichnet, dass** der dritte, sich nach aussen ersteckende Abschnitt (22) grösseren Durchmessers einen Flansch (28) als Gegenlager für einen Flansch am entsprechenden dritten Abschitt (22) des Blattkörpers (11 ) aufweist.

5. Blattwurzel nach Anspruch 4, **dadurch gekennzeichnet, dass** im Bereich des Flansches (28) ein Verstellzapfen (14) zur Übertragung der Verstellkräfte der Verstelleinrichtung auf den Blattkörper (11) angeordnet ist, der sich durch den Grundkörper (15), den Blattkörper (11) und die Blatthülse (10) parallel zur Längsachse der Blattwurzel erstreckt.

6. Blattwurzel nach Anspruch 5, **dadurch gekennzeichnet, dass** der Verstellzapfen (14) als ein eingepresster Zylinderstift ausgebildet ist.

## Claims

1. Blade root for propellers and rotor blades of fibre-reinforced plastics for assembly in propeller or rotor hubs of aircraft, ground-action vehicles, wind generators or blowers with adjustable or movable pitch with a divided blade sleeve (10) and a base body (15) wherein a blade body (11) is mounted between the base body (15) and the blade sleeve (10) and the inner face of the blade sleeve (10) has a first section on the outside of the hub, a second section (20) of smaller diameter adjoining the first in the hub direction and curved inwards relative to the longitudinal axis of the blade root, and a third outwardly extending section (22) of larger diameter which adjoins the second section (20),
**characterised in that** the first section (18) on the outside of the hub has a cylindrical shape, that the shape of the blade body (11) and base body (15) matches the shape of the inside surface of the blade sleeve (10), and that the divided blade sleeve (10) is stuck onto the finished blade body (11).

2. Blade root according to claim 1 **characterised in that** the blade sleeve (10) is made of either steel, aluminium, titanium or of an alloy of these materials.

3. Blade root according to claim 1 or 2 **characterised in that** the blade sleeve halves (24, 26) are formed without any gap and are connected together by means of two clamping rings (13, 12).

4. Blade root according to one or more of claims 1 to 3 **characterised in that** the third outwardly extending section (22) of larger diameter has a flange (28) as counter bearing for a flange on the corresponding third section (22) of the blade body (11).

5. Blade root according to claim 4 **characterised in that** in the region of the flange (28) there is an adjusting pivot (14) for transferring the adjusting forces of the adjusting device to the blade body (11) which extends through the base body (15), the blade body (11) and the blade sleeve (10) parallel to the longitudinal axis of the blade root.

6. Blade root according to claim 5 **characterised in that** the adjusting pivot (14) is designed as a pressed-in cylindrical pin.

## Revendications

1. Emplanture pour pales d'hélice ou de rotor en matière plastique renforcée par des fibres, à agencer dans des moyeux d'hélice ou de rotor d'avions, de véhicules à effet de sol, de générateurs d'énergie éolienne ou de souffleries à pente réglable ou variable, avec une enveloppe de pale en deux parties (10) et un corps de base (15), un corps de pale (11) étant disposé entre le corps de base (15) et l'enveloppe de pale (10), et la surface intérieure de l'enveloppe de pale (10) présentant une première section à l'extérieur du moyeu, une deuxième section (20), consécutive à celle-ci dans la direction du moyeu, courbée vers l'intérieur en direction de l'axe longitudinal de l'emplanture et de diamètre inférieur, et une troisième section (22), consécutive à la deuxième section (20), s'étendant vers l'extérieur et de plus grand diamètre, **caractérisée en ce que** la première section (18) à l'extérieur du moyeu est de forme cylindrique, **en ce que** la forme du corps de pale (11) et du corps de base (15) est adaptée à la forme de la surface intérieure de l'enveloppe de pale (10), et **en ce que** l'enveloppe de pale en deux parties (10) est collée sur le corps de pale terminé (11).

2. Emplanture selon la revendication 1, **caractérisée en ce que** l'enveloppe de pale (10) se compose d'acier, d'aluminium, de titane ou d'un alliage de ces matériaux.

3. Emplanture selon la revendication 1 ou 2, **caractérisée en ce que** les moitiés d'enveloppe de pale (24, 26) sont réalisées sans fente et sont reliées ensemble au moyen de deux bagues de serrage (13, 12).

4. Emplanture selon l'une quelconque ou plusieurs des revendications 1 à 3, **caractérisée en ce que** la troisième section (22) s'étendant vers l'extérieur et de plus grand diamètre présente une bride (28) comme palier-support pour une bride sur la troisième section (22) correspondante du corps de pale (11).

5. Emplanture selon ta revendication 4, **caractérisée en ce qu'**au niveau de la bride (28), une cheville de réglage (14) est disposée pour transmettre les forces de réglage du dispositif de réglage au corps de pale (11), la cheville s'étendant à travers le corps de base (15), le corps de pale (11) et l'enveloppe de pale (10) en parallèle à l'axe longitudinal de l'emplanture.

6. Emplanture selon la revendication 5, **caractérisée en ce que** la cheville de réglage (14) est réalisée comme une goupille cylindrique enfoncée.
